# EUROPEAN PATENT SPECIFICATION

(11) **EP 4 286 232 B1**
(45) Date of publication and mention of the grant of the patent: **26.02.2025**
(21) Application number: 22177219.7
(22) Date of filing: 03.06.2022
(51) Int. Cl.: B60T 17/08

(54) **COMBINED SERVICE BRAKE AND SPRING BRAKE CYLINDER WITH SERVICE BRAKE CYLINDER MOUNTED INSIDE THE SPRING BRAKE CYLINDER**
KOMBINIERTER BETRIEBSBREMS- UND FEDERSPEICHERBREMSZYLINDER MIT IM FEDERSPEICHERBREMSZYLINDER ANGEORDNETEM BETRIEBSBREMSZYLINDER
COMBINAISON DE FREIN DE SERVICE ET DE CYLINDRE DE FREIN À RESSORT AVEC CYLINDRE DE FREIN MONTÉ À L'INTÉRIEUR DU CYLINDRE DE FREIN À RESSORT

(43) Date of publication of application: 06.12.2023
(73) Proprietor: KNORR-BREMSE Systeme für Nutzfahrzeuge GmbH, 80809 München (DE)
(72) Inventor: HERICHER, Stéphane, 14670 Basseneville (FR)

(56) References cited:
- EP-A1- 0 452 621
- DE-A1- 102014 002 112
- JP-A- S55 160 646

## Description

The present invention relates to a combined service brake and spring brake cylinder according to the preamble of claim 1, and to a pneumatic or electro-pneumatic vehicle brake comprising at least one combined service brake and spring brake cylinder according to claim 10.

Combined pneumatic service brake and spring brake cylinders with a service brake function and a parking brake function are usually arranged on rear axles of commercial vehicles and usually have two compressed air ports. One compressed air port controls the parking brake function and is under a parking brake release pressure for compressing an accumulator spring of the spring brake cylinder when the commercial vehicles are in a driving state. The other compressed air port controls the service brake function and is vented in the driving condition to brake the commercial vehicle via the service brake. The service brake function is controlled by means of a usually in the form of a diaphragm cylinder. If the commercial vehicle is to be parked, the spring brake cylinder is released and the parking brake is applied via the spring tension of the accumulator spring.

A combined service brake cylinder and spring brake cylinder is known, for example, from DE 10 2014 002 112 A1. There, the spring brake cylinder and the service brake cylinder are arranged coaxially one behind the other and connected to each other by an intermediate flange. However, such an arrangement requires a relatively long installation space within the wheel arches of the commercial vehicles, which can cause space problems.

In order to solve this problem, a combined service brake cylinder and spring brake cylinder is proposed in DE 10 2014 002 112 A1, in which the service brake cylinder and the spring brake cylinder are placed laterally next to one another, the accumulator spring being arranged there around the service brake cylinder. In this case, the service brake piston is guided within the spring brake piston and axially thereon, which has a radially inwardly extending circumferential edge which abuts against an end-face annular surface of the service brake piston in order to drive the service brake piston together with the service brake piston rod into the applied position when the parking brake is applied. However, this arrangement has some disadvantages. Firstly, the radially inwardly extending peripheral edge of the spring brake piston is loaded by the service brake pressure in the service brake chamber, so that during service braking a force is generated at the spring brake piston directed against the spring brake release pressure in the spring brake chamber, which loads the spring brake piston in the application direction of the parking brake. Secondly, the effective area of the spring brake piston on which the parking brake release pressure can act to hold the parking brake released is relatively small, resulting in a high required parking brake release pressure or a low spring stiffness of the accumulator spring, but with disadvantages in terms of compressed air consumption or parking brake force.

JP 555160646 A discloses a brake cylinder according to the preamble of claim 1. There, to cause air brake action and spring brake action through the same piston rod, a service brake piston and a spring brake piston are provided, where the piston rod is attached to the service brake piston which extends through the spring brake piston. When the spring brake is activated, a spring chamber where an accumulator spring is accommodated is connected with a return spring chamber where a return spring for the service brake piston is accommodated. This connection can cause an unwanted flow of dirt and/or air from one chamber to the other. Thus, the parking and service brake functions are affected by each other.

It is the object of the present invention to provide a short design combined service brake and spring brake cylinder having a low compressed air consumption and parking and service brake functions which are unaffected by each other. Likewise, to provide a pneumatic or electro-pneumatic vehicle brake having at least one such combined service brake and spring brake cylinder.

This object is solved with the features of claims 1 and 10. Advantageous further embodiments are the subject of the subclaims.

### Disclosure of the invention

The invention is based on a combined service brake and spring brake cylinder for operating a service brake and a parking brake, comprising:
a) a spring brake cylinder, a spring brake piston and at least one accumulator spring loading the spring brake piston in an application direction of the parking brake, the spring brake piston being displaceably guided on a radially inner circumferential surface of the spring brake cylinder, and the spring brake piston and the spring brake cylinder delimiting a spring brake chamber which can be pressurized by a parking brake pressure,
b) a service brake cylinder and a service brake piston, the service brake cylinder and the service brake piston delimiting a service brake chamber which can be pressurized with a service brake pressure and vented, wherein
c) the service brake cylinder is arranged radially inside the spring brake cylinder,

That the service brake cylinder, when viewed radially, is disposed within the spring brake cylinder may mean that the service brake cylinder, when viewed radially, is disposed completely within and enclosed by the wall of the spring brake cylinder. Further, it may mean that the service brake cylinder, when viewed axially, is disposed partially or completely within the spring brake cylinder. "Radial" and "axial" refer in particular to a common longitudinal axis of the combined service brake cylinder and spring brake cylinder, wherein the service brake cylinder and the spring brake cylinder are arranged in particular coaxially.

Furthermore, a spring brake cylinder housing of the spring brake cylinder may comprise a closed housing of the spring brake cylinder, in which the service brake cylinder is then completely accommodated, for example.

Further it is provided that
d) the service brake piston is displaceably guided directly on a radially inner circumferential surface of the service brake cylinder, or wherein
e) a diaphragm cooperating with the service brake piston is attached to the service brake cylinder and/or to the spring brake cylinder, particularly directly, and that
f) between the radially outer circumferential surface of the service brake cylinder (6) and the spring brake cylinder a spring chamber is formed as an annular chamber in which the at least one accumulator spring is arranged.

"Directly guided" should mean here, for example, that a radially outer circumferential surface of the service brake piston is guided on the radially inner circumferential surface of the service brake cylinder. In this case, a sealing element is preferably arranged therebetween, which, in addition to a sealing function, then also performs a guiding function for the service brake piston.

Alternatively, a diaphragm cooperating with the service brake piston may be provided, in which case the service brake piston forms a pressure plate, for example a central pressure plate, on which the diaphragm acts. The diaphragm may, for example, be secured to or in a joint of the service brake cylinder and the spring brake cylinder. Conceivably, a radially outer edge of the diaphragm may be clamped between the service brake cylinder and the spring brake cylinder.

With such an arrangement, the combined service brake and spring brake cylinder is short on the one hand, because the service brake cylinder is arranged radially and particularly also axially and particularly completely inside the spring brake cylinder.

On the other hand, the disadvantages of the prior art described above with regard to an influence of the spring brake piston by the service brake pressure present in the service brake chamber are thereby avoided, because the service brake piston is guided directly on a radially inner circumferential surface of the service brake cylinder in a displaceable manner or because a diaphragm cooperating with the service brake piston is attached to the service brake cylinder and/or to the spring brake cylinder.

Last but not least, the spring brake piston can then also have a larger effective area in relation to the parking brake pressure, so that the pressure level of the parking brake release pressure and thus also the energy consumption can be reduced. The parking brake release pressure is the pressure at which the parking brake releases against the action of the at least one accumulator spring.

Also, the service brake cylinder may include an edge or a rim that is internally attached to the spring brake cylinder.

According to the invention,
g) a breathing device is provided comprising at least:
g1) a breathing valve which is arranged in a through-opening of the service brake piston and is controlled by the service brake pressure in the service brake chamber in such a way that it assumes an open position when the service brake chamber is vented, in which a first flow connection between the service brake chamber and the a return spring chamber is open, and it is brought from the open position into a closed position, in which the first flow connection is blocked, when the service brake chamber is pressurized,
g2) a second flow connection between the return spring chamber and the spring chamber (1)
g3) a third flow connection between the spring chamber and the atmosphere.

For example, the second flow connection may comprise a through opening in the cylindrical wall or in the bottom of the service brake cylinder.

For example, the third flow connection may comprise a through opening in a wall or a cover of the spring brake cylinder. Also, the third flow connection may comprise a filter and/or a valve that prevents dirt and moisture from entering the spring brake cylinder from the outside.

For example, the breathing valve may include a valve seat and a valve body biased away from the valve seat by spring means to the breathing valve open position, the valve body being urged against the valve seat by service braking pressure against the action of the spring means to move the breathing valve from the open position to the closed position.

The operation of the breathing device may then be described by way of example as follows:
For example, when the service brake chamber is pressurized, the breathing valve assumes the closed position so that no compressed air can pass from the service brake chamber into the return spring chamber. On the other hand, the moving service brake piston reduces the volume of the return spring chamber, thereby creating a first air flow which then passes through the second flow connection and the third flow connection to enter the atmosphere. Then, no excess pressure in the return spring chamber can impede the movement of the service brake piston in the service brake application direction.

On the other hand, when the spring brake chamber is pressurized to release the parking brake, the volume of the spring chamber is reduced, thereby creating a second air flow which can then pass through the third flow connection to enter the atmosphere. Then, no excess pressure in the spring chamber can impede the movement of the spring brake piston in the parking brake release direction.

Preferably, the service brake piston may be connected to a service brake piston rod which actuates the service brake when the service brake chamber is pressurized by the service brake pressure and which releases the service brake when the service brake chamber is vented. In particular, the service brake piston rod can be formed by a cylindrical or rod-shaped body, to the end of which the service brake piston projecting radially outwards from this end is then attached.

Also, the spring brake piston may include a central opening having a bearing through which the spring brake piston is axially guided on the service brake piston rod and/or through which the service brake piston rod and the spring brake piston are axially movable relative to each other.

According to a further embodiment, the service brake piston rod may have, in particular at its radially outer periphery, a radial protrusion which forms an axial stop for the spring brake piston.

The radial protrusion can then be arranged on the service brake piston rod in such a way that
a) the spring brake piston, by abutting against the radial protrusion of the service brake piston rod, brings the service brake piston rod into the applied position of the parking brake when the spring brake chamber is vented, and/or in that
b) the radial protrusion of the service brake piston rod comes out of engagement with the spring brake piston and the service brake piston rod is brought into the service brake application position when the spring brake chamber and the service brake chamber are pressurized, and/or in that
c) the spring brake piston by abutting on the radial projection and the service brake piston by moving the service brake piston rod to the applied position of the parking brake and the service brake when the spring brake chamber is vented and when the service brake chamber is pressurized.

A particularly large effective area of the spring brake piston with respect to the parking brake release pressure results if the spring brake piston, viewed radially, extends from the central opening beyond a radially outer circumferential surface of the service brake cylinder to the radially inner circumferential surface of the spring brake cylinder. The effective surface of the spring brake piston on which the parking brake release pressure acts is then located, for example, on the side of the spring brake piston facing the spring brake chamber.

The invention also relates to a pneumatic or electro-pneumatic vehicle brake comprising at least one combined service brake and spring brake cylinder described above.

### Drawing

A preferred embodiment of the invention is shown below in the drawing and will be explained in more detail in the following description. The drawing shows
- Fig. 1: a perspective view of a preferred embodiment of a combined service brake and spring brake cylinder of an electro-pneumatic brake system of a commercial vehicle, looking at the one end face from which an actuating element for a disc brake can be seen;
- Fig. 2: a perspective view of the preferred embodiment of the combined service brake and spring brake cylinder of Fig. 1, looking at the other end face from which an actuating element of an emergency release device protrudes;
- Fig. 3: a cross-sectional view of the service brake and spring brake cylinder of Fig. 1 and Fig. 2 in a situation in which the parking brake and the service brake are released, in particular during a driving condition of the commercial vehicle;
- Fig. 4: a cross-sectional view of the service brake and spring brake cylinder of Fig. 1 and Fig. 2 in a situation in which the parking brake is released and the service brake is or is applied, in particular during a driving condition of the commercial vehicle;
- Fig. 5: a cross-sectional view of the service brake and spring brake cylinder of Fig. 1 and Fig. 2 in a situation in which the parking brake is applied, in particular during the production of a parking condition of the commercial vehicle;
- Fig. 6: a cross-sectional view of a breathing valve of the service brake and spring brake cylinder of Fig. 1 and Fig. 2 in an open position;
- Fig. 7: a cross-sectional view of a breathing valve of Fig. 6 in a closed position.

### Description of the preferred embodiment

A combined pneumatic service brake and spring brake cylinder 1 having a service function and a parking brake function as described hereinafter is usually arranged on a wheel of a rear axle of commercial vehicles and usually has two compressed air ports 2, 5. A first compressed air port 2 controls the parking brake function and, in the driving state of commercial vehicles, is under a parking brake release pressure for compressing an accumulator spring 3 of a spring brake cylinder 4. A second compressed air port 5 controls the service brake function and, particularly in the driving state, can be pressurized to brake the commercial vehicle via the service brake. In this case, the service brake function is carried out by means of a service brake cylinder 6 designed as a diaphragm cylinder or brake piston cylinder. If the commercial vehicle is to be parked, the spring brake cylinder 4 is vented and the parking brake is applied via the spring tension of the accumulator spring 3.

In an electro-pneumatic brake system, for example, the pressure for the two compressed air ports 2, 5 is generated by a solenoid valve device not shown here, which is supplied with compressed air under supply pressure from at least one compressed air supply. For coordinated control or regulation of the service brake pressure or parking brake pressure introduced into the two compressed air ports 2, 5, the solenoid valve device is controlled by an electronic control system.

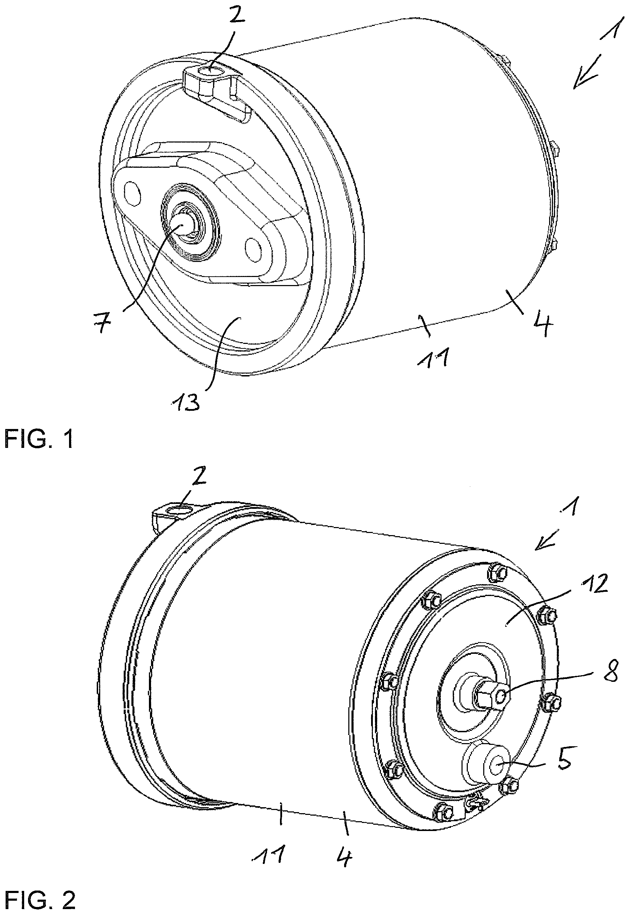

**Fig. 1** shows a perspective view of a preferred embodiment of a combined service brake and spring brake cylinder 1 of an electro-pneumatic brake system of a commercial vehicle according to the invention, looking at one end face from which a first actuating element 7, for example for a disc brake, can be seen. **Fig. 2** represents a perspective view of the combined service brake and spring brake cylinder 1 of **Fig. 1****,** looking at the other end face from which a second actuating element 8 of an emergency release device 9 protrudes.

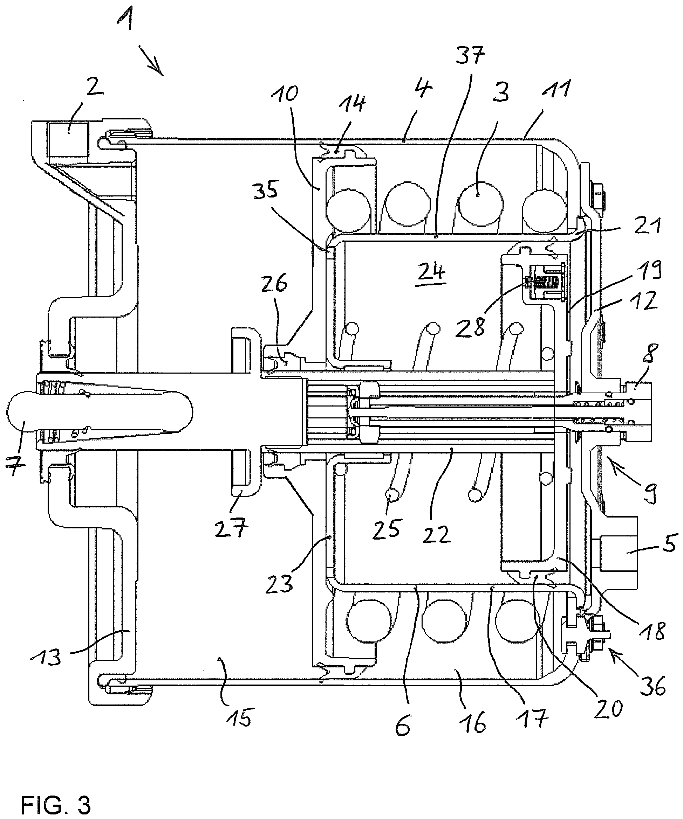

As shown in **Fig. 3****,** which is a cross-sectional view of the service brake and spring brake cylinder 1 of **Fig. 1** and **Fig. 2** in a situation in which the parking brake and the service brake are released, in particular during a driving condition of the commercial vehicle, the combined service brake and spring brake cylinder 1 comprises the spring brake cylinder 4, a spring brake piston 10 axially slidably guided therein, and the accumulator spring 3 loading the spring brake piston 10 in an applied position of the parking brake.

The spring brake cylinder 4 comprises a substantially cylindrical spring brake cylinder housing 11 with here, for example, two covers 12, 13 attached to the end faces, wherein the first actuating element 7 for the disc brake projects from a central through-opening of a first cover 13 and the second actuating element 8 of the emergency release device 9 projects from a central through-opening of a second cover 12. Alternatively, the spring brake cylinder housing 11 could also be pot-shaped and then have, for example, only one cover. Generally, the spring brake cylinder housing 11 forms a closed housing of the spring brake cylinder 4, in which the service brake cylinder 6 is completely excluded here, for example.

The spring brake piston 10 is axially displaceably guided on a radially inner circumferential surface of the spring brake cylinder 4 or of the spring brake cylinder housing 11, wherein a first movement seal 14 is arranged between a radially outer edge of the spring brake piston 10 and the radially inner circumferential surface of the spring brake cylinder 4 or of the spring brake cylinder housing 11, a first movement seal 14 is arranged which is connected here to the radially outer edge of the spring brake piston 10 and which, in addition to a sealing function, also performs a guide function for the spring brake piston 10.

With its one side facing away from the accumulator spring 3, the spring brake piston 10 delimits a spring brake chamber 15 which can be pressurized and vented by a parking brake pressure via the first compressed air connection 2. The accumulator spring 3 is then supported with its one end on the other side of the spring brake piston 10, the other end of which is supported on the spring brake cylinder housing 11. The first air pressure port 2 is formed, for example, in the first cover 13. However, it could also be formed in a bottom of the spring brake cylinder or the spring brake cylinder housing 11 of the spring brake cylinder 4 if the spring brake cylinder housing 11 is pot-shaped, for example.

The accumulator spring 3 is then accommodated in a spring chamber 16 which is formed here as an annular chamber and is radially outer with respect to the service brake cylinder 6, and which is limited or bounded radially inwardly by a radially outer circumferential surface of a service brake cylinder housing 17 of the service brake cylinder 6 and radially outwardly by the radially inner circumferential surface of the spring brake cylinder housing 11. Axially, the spring chamber 16 is limited or bounded by the spring brake piston 10 and the spring brake cylinder housing 11.

The service brake cylinder 6 or the service brake cylinder housing 17 directly guides an axially displaceable service brake piston 18, the service brake cylinder 6 and the service brake piston 18 delimiting a service brake chamber 19 which can be pressurized and vented with a service brake pressure via the second compressed air port 5.

The service brake cylinder 6 or the service brake cylinder housing 17 of the service brake cylinder 6 is arranged radially and here, for example, also axially, preferably completely within the spring brake cylinder 4 or within the spring brake cylinder housing 11 of the spring brake cylinder 4. Further, the service brake piston 18 is axially slidably guided directly on the radially inner peripheral surface of the service brake cylinder 6 or the service brake cylinder housing 17. This direct guidance includes that a second movement seal 20 is arranged therebetween, which here is connected to the radially outer edge of the service brake piston 18 in addition to a sealing function also performs a guiding function for the service brake piston 18.

According to a further embodiment not shown here, a diaphragm cooperating with the service brake piston 18 may, for example, be attached with its radially outer edge to the service brake cylinder 6 and/or to the spring brake cylinder 4. The service brake cylinder 6 is then a so-called diaphragm cylinder. In this case, the service brake piston 18, which is then smaller in its radial extension, forms a pressure plate, for example a central pressure plate, on which the diaphragm acts, is connected with or on which the diaphragm is supported. The diaphragm may, for example, be secured to or in a joint between the service brake cylinder 6 and the spring brake cylinder 4. It is conceivable, for example, that a radially outer edge of the diaphragm is clamped between the service brake cylinder 6 and the spring brake cylinder 4. With reference to **Fig. 3****,** the radially outer edge of the diaphragm may be clamped between the second cover 12 of the spring brake cylinder 4 and an edge 21 of the service brake cylinder 6, which is preferably pot-shaped, as in this case.

In both embodiments, the service brake piston 18 is connected to a service brake piston rod 22, which is made hollow here, for example, to receive the emergency release device 9 in its interior. The service brake piston rod 22 then actuates the service brake via the second actuating element 7 when the service brake chamber 19 is pressurized with a service brake application pressure, and which releases the service brake when the service brake chamber 19 is vented. The end of the service brake piston rod 22 facing the service brake chamber 19 can then project radially outwardly away from the service brake piston rod 22 in a mushroom-like manner.

The second compressed air port 5, which is formed for example in the second cover 12, is then used for pressuring/venting the service brake chamber 19. As indicated above, the emergency release device 9 for manual emergency release of the combined service brake and spring brake cylinder 1, which is not described in detail here, may be accommodated or integrated in the service brake piston rod 22. By turning the second actuating element 8 projecting from the combined service brake and spring brake cylinder 1, the service brake piston rod 22 can then be screwed into the release position of the parking brake or the service brake. Such manual emergency release is necessary in particular if no more parking brake release pressure can be generated in the spring brake chamber 15, for example, due to an electrical defect in the solenoid valve device or in its control system or also in the event of a power failure.

The service brake cylinder 6 or the service brake cylinder housing 17 is here, for example, of pot-shaped design and has a cylindrical wall 37 extending in parallel into the spring brake cylinder 4 or into the spring brake cylinder housing 1, and a bottom 23. The bottom 23 is provided, for example, with a central opening through which the service brake piston rod 22 then projects into the spring brake cylinder 4 or into the spring brake chamber 15. Furthermore, the service brake piston rod 22 penetrates the spring brake chamber 15 centrally and then receives the first actuating element 7 for the disc brake in a recess at its end facing the disc brake and projecting out of the spring brake cylinder housing 11 through the through-opening.

A return spring chamber 24 is formed here between the service brake piston 18 and the bottom 23 of the service brake cylinder 6, with a return spring 25 which loads the service brake piston 18 into the service brake release position. Also, the return spring chamber 24 is penetrated axially and centrally by the service brake piston rod 22.

As explained above, the here for example pot-shaped service brake cylinder 6 has the free edge 21 which is preferably fixed to the spring brake cylinder 4 on the inside, in particular in the region of the fixing of the end-face second cover 12 to the spring brake cylinder 4, whereby this second cover 12 also delimits or closes the service brake chamber 19. Then, the service brake chamber 19 which can be ventilated and exhausted is delimited by the cylindrical wall 37 of the service brake cylinder housing 17, the second cover 12 of the spring brake cylinder 4 and the service brake piston 18 or, alternatively, by the above-mentioned diaphragm in the case a the above-mentioned diaphragm cylinder used as the service brake cylinder 6.

As preferably shown in **Fig. 3****,** in the parking brake release position, i.e. when the spring brake chamber 15 is pressurized, the spring brake piston 10 contacts the bottom 23 of the service brake cylinder 6 from the outside with respect to the service brake cylinder 6 with its side facing away from the spring brake chamber 15. This contact is caused by the parking brake release pressure acting on the spring brake piston 10.

For example, the spring brake piston 10 includes a central opening having a bearing 26 through which the spring brake piston 10 is axially guided on the service brake piston rod 22. The bearing 26 therefore allows the service brake piston rod 22 and the spring brake piston 10 to move axially relative to each other. The bearing 26 is designed, for example, as a sealing bearing.

The spring brake piston 10 then extends, viewed radially, from the bearing 26 or from the central opening of the spring brake piston 10 beyond a radially outer circumferential surface of the service brake cylinder 6 or of the service brake cylinder housing 17 to the radially inner circumferential surface of the spring brake cylinder 4 or of the spring brake cylinder housing 11. The effective surface of the spring brake piston 10 on which the parking brake pressure or the parking brake release pressure acts is located on the side of the spring brake piston 10 facing the spring brake chamber 15 and then also extends from the bearing 26 or from the central opening of the spring brake piston 10 to the radially inner circumferential surface of the spring brake cylinder 4 or of the spring brake cylinder housing 11. The effective surface of the spring brake piston 10 on which the parking brake pressure or the parking brake release pressure acts is located on the side of the spring brake piston 10 facing the spring brake chamber 15. The effective surface of the spring brake piston 10 also extends from the bearing 26 or from the central opening of the spring brake piston 10 beyond the radially outer circumferential surface of the service brake cylinder 6 or of the service brake cylinder housing 17 to the radially inner circumferential surface of the spring brake cylinder 4 or of the spring brake cylinder housing 11.

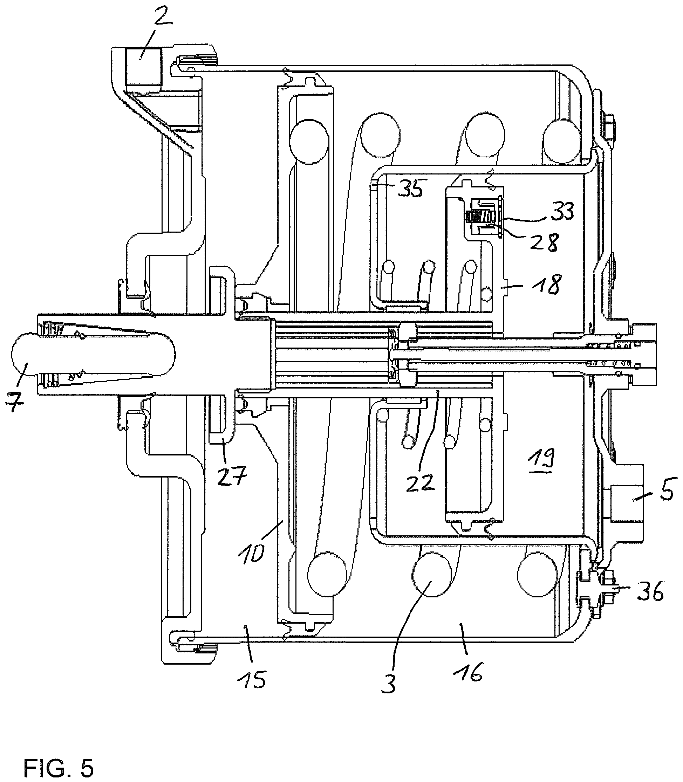

As also shown in **Fig. 3****,** the service brake piston rod 22 has, in particular at its radially outer periphery, a radial protrusion 27 which forms an axial stop for the bearing 26 or for the central opening of the spring brake piston 10. This radial protrusion 27 is arranged on the service brake piston rod 22, for example, in such a way that the spring brake piston 10 brings the service brake piston rod 22 into the spring brake application position by abutting against the radial protrusion 27 when the spring brake chamber 15 is vented to apply the parking brake, as shown in **Fig. 5****.** It is immaterial whether the service brake chamber 19 is additionally pressurized to bring the service brake piston rod 22 into the applied position of the service brake, because the service brake piston rod 22 has already moved into the applied position as a result of the release of the accumulator spring 3. However, in order not to overload the disc brake mechanism, parallel application of the parking brake and the service brake may be undesirable.

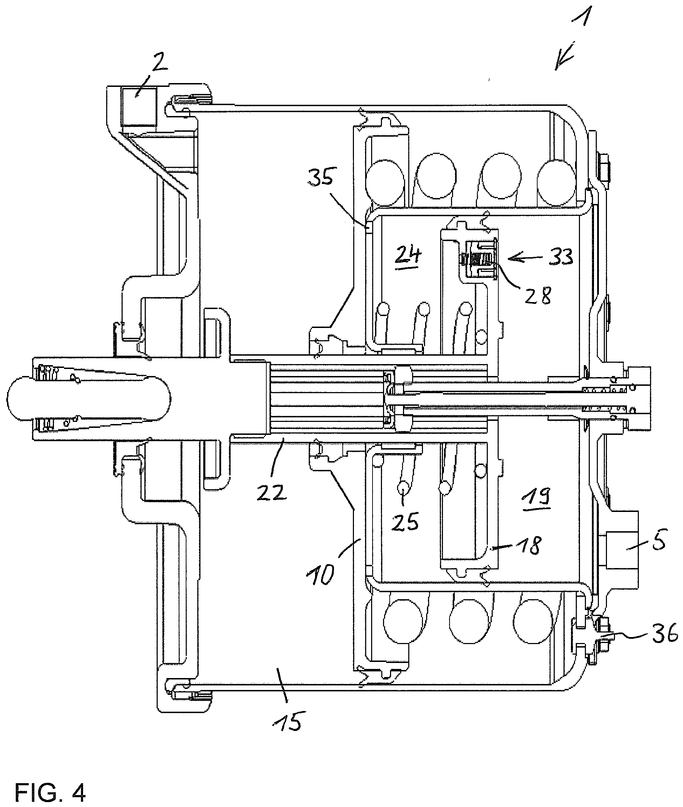

On the other hand, the radial protrusion 27 of the service brake piston rod 22 comes out of contact or engagement with the spring brake piston 10 when the service brake piston rod 22 is brought into the applied position of the service brake by pressurizing the service brake chamber 19, when at the same time the spring brake chamber 15 continues to be pressurized the parking brake is thereby released. This condition is shown in **Fig. 4****.**

Further, by abutting against the radial protrusion 27, the spring brake piston 10, together with the service brake piston 18, can move the service brake piston rod 22 to the spring brake application position and the service brake application position when the spring brake chamber 15 is vented and when the service brake chamber 19 is pressurized, as can be readily imagined with reference to **Fig. 5****.** Therefore, the service brake piston rod 22 connected to the service brake piston 18 and acting axially on the first disc brake actuating member 7 actuates both the service brake and the parking brake respectively by applying the disc brake.

Particularly preferably, a breathing device is also provided, which comprises, for example, a breathing valve 28 which is arranged here, for example, in a through-opening of the service brake piston 18 and is controlled by the service brake pressure in the service brake chamber 19.

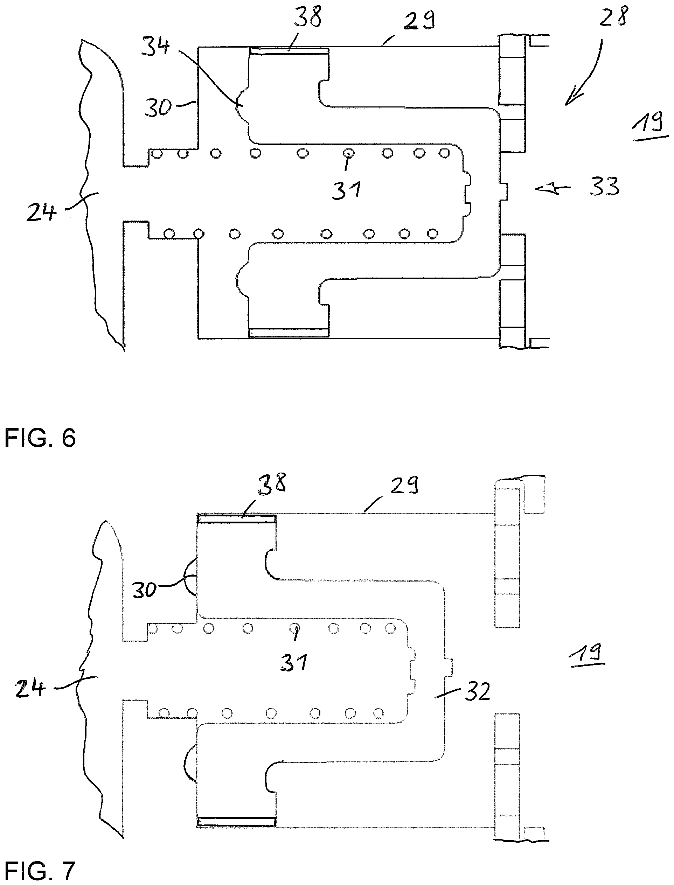

As can be seen from **Fig. 6** and **Fig. 7****,** the breathing valve 28 may comprise, for example, a valve seat 30 formed in a valve body 29 and a valve body 32 biased by a spring 31 away from the valve seat 30 into the open position of the breathing valve 28, the valve body 32 being urged against the valve seat 30 by the service brake pressure acting on it against the force of the spring 31 to move the breathing valve 28 from the spring biased open position to the closed position. **Fig. 6** then shows the open position and **Fig. 7** the closed position of the breathing valve 28.

When the service brake chamber 19 is vented, the breathing valve 28 can then assume the open position in which a first flow connection 33 through the through opening between the service brake chamber 19 and the return spring chamber 24 is open due to the bias of the spring 31. When the service brake chamber 19 is pressurized, the breathing valve 28 is then moved from the open position to the closed position in which the first flow connection 33 through the through opening is blocked because the flow caused by the service brake pressure first passes through a radially outer gap 38 between the valve body 32 and the valve base body 29, and then also passes through the through opening in the service brake piston. However, after some time, i.e. in a transition phase, the pressure exerted on the valve body 32 becomes so great that a sealing portion 34 of the valve body 32 comes into contact with the valve seat 30, thereby closing the first flow connection 33 or the through-opening. This prevents compressed air from then still flowing from the service brake chamber 19 into the return spring chamber 24.

Furthermore, an in particular always open second flow connection 35 between the return spring chamber 24 and the spring chamber 16, as well as an in particular always open third flow connection 36 between the spring chamber 16 and the atmosphere can be components of the breathing device.

For example, the second flow connection 35 may comprise a through opening in the cylindrical wall 37 or in the bottom 23 of the service brake cylinder 6 or the service brake cylinder housing 17. Furthermore, the third flow connection 36 indicated in **Fig. 1** may comprise a through opening in the spring brake cylinder housing 11, in particular a through opening on the front side. Consequently, the second flow connection 35 and the third flow connection 36 open into the spring chamber 16 here and also communicate with each other through the spring chamber 16.

Also, the third flow connection 36 may comprise a filter and/or a valve, for example in a cap, to prevent dirt and moisture from entering the spring brake cylinder 4 from the outside.

The operation of the breathing device may then be described by way of example as follows:
For example, as described above, when the service brake chamber 19 is pressurized, the breathing valve 28 assumes the closed position so that no compressed air can pass from the service brake chamber 19 into the return spring chamber 24. On the other hand, the volume of the return spring chamber 24 is reduced by the shifting or moving service brake piston 18, thereby creating a first air flow which then passes the second flow connection 35 and the third flow connection 36 to enter the atmosphere. Then, no excess pressure in the return spring chamber 24 can impede the movement of the service brake piston 18 in the service brake application direction.

On the other hand, when the spring brake chamber 15 is pressurized to release the spring brake, the volume of the spring chamber 16 is reduced, thereby creating a second air flow which can then pass through the third flow connection 36 to enter the atmosphere. Then, no excess pressure in the spring chamber 16 can impede the movement of the spring brake piston 10 in the parking brake release direction.

On the other hand, if the volume of the spring chamber 16 increases when the spring brake chamber 15 is vented to apply the spring or parking brake, air can be drawn in from the outside through the third flow connection 36 as a result of the pressure drop that then occurs, in order to provide pressure equalization there.

### LIST OF REFERENCE SIGNS

- 1: combined service brake and spring brake cylinder
- 2: first compressed air port
- 3: accumulator spring
- 4: spring brake cylinder
- 5: second compressed air port
- 6: service brake cylinder
- 7: first actuating element
- 8: second actuating element
- 9: emergency release device
- 10: spring brake piston
- 11: spring brake cylinder housing
- 12: second cover
- 13: first cover
- 14: first movement seal
- 15: spring brake chamber
- 16: spring chamber
- 17: service brake cylinder - housing
- 18: service brake piston
- 19: service brake chamber
- 20: second movement seal
- 21: edge service brake cylinder
- 22: service brake piston rod
- 23: bottom
- 24: return spring chamber
- 25: return spring
- 26: bearing
- 27: radial protrusion
- 28: breathing valve
- 29: valve main body
- 30: valve seat
- 31: spring
- 32: valve body
- 33: first flow connection
- 34: sealing section
- 35: second flow connection
- 36: third flow connection
- 37: cylindrical wall
- 38: gap

## Claims

1. Combined service brake and spring brake cylinder (1) for operating a service brake and a parking brake, comprising:
a) a spring brake cylinder (4), a spring brake piston (10) and at least one accumulator spring (3) loading the spring brake piston (10) in a direction of application of the parking brake, wherein the spring brake piston (10) is displaceably guided on a radially inner circumferential surface of the spring brake cylinder (4), and the spring brake piston (10) and the spring brake cylinder (4) delimit a spring brake chamber (15) which can be ventilated by a parking brake pressure,
b) a service brake cylinder (6) and a service brake piston (18), the service brake cylinder (6) and the service brake piston (18) delimiting a service brake chamber (19) which can be pressurized with a service brake pressure and vented, wherein
c) the service brake cylinder (6), viewed radially, is arranged inside the spring brake cylinder (4), and
d) wherein the service brake piston (18) is displaceably guided directly on a radially inner circumferential surface of the service brake cylinder (6), or
e) wherein a diaphragm cooperating with the service brake piston (18) is attached to the service brake cylinder (6) and/or to the spring brake cylinder (4), and wherein
f) between a radially outer circumferential surface of the service brake cylinder (6) and the spring brake cylinder (4) a spring chamber (16) is formed as an annular chamber in which the at least one accumulator spring (3) is arranged, **characterized in that**
g) a breathing device is provided comprising at least:
g1) a breathing valve (28) which is arranged in a through-opening of the service brake piston (18) and is controlled by the service brake pressure in the service brake chamber (19) in such a way that it assumes an open position when the service brake chamber (19) is vented, in which a first flow connection (33) between the service brake chamber (19) and a return spring chamber (24) is open, and it is brought from the open position into a closed position, in which the first flow connection (33) is blocked, when the service brake chamber (19) is pressurized,
g2) a second flow connection (35)-between the return spring chamber (24) and the spring chamber (16),
g3) a third flow connection (36) between the spring chamber (16) and the atmosphere.

2. Combined service brake and spring brake cylinder according to claim 1, **characterized in that** the service brake piston (18) is connected to a service brake piston rod (22) which actuates the service brake when the service brake chamber (19) is pressurized and which releases the service brake when the service brake chamber (19) is vented.

3. Combined service brake and spring brake cylinder according to claim 2, **characterized in that** the spring brake piston (10) has a central opening with a bearing (26) through which the spring brake piston (10) is axially guided on the service brake piston rod (22) and/or through which the service brake piston rod (22) and the spring brake piston (10) are axially displaceable relative to one another.

4. Combined service brake and spring brake cylinder according to claim 3, **characterized in that** the service brake piston rod (22) has, in particular on its radially outer circumference, a radial projection (27) which forms an axial stop for the spring brake piston (10).

5. Combined service brake and spring brake cylinder according to claim 4, **characterized in that** the radial projection (27) is arranged and formed on the service brake piston rod (22) in such a way that
a) the spring brake piston (10) brings the service brake piston rod (22) into the applied position of the parking brake by abutment against the radial projection (27) when the spring brake chamber (15) is vented, and/or **in that**
b) the radial projection (27) comes out of engagement with the spring brake piston (10) and thereby the service brake piston rod (22) is brought into the applied position of the service brake when the spring brake chamber (15) and the service brake chamber (19) are pressurized, and/or that
c) the spring brake piston (10) by abutting against the radial projection (27) and the service brake piston (18) bring the service brake piston rod (22) into the applied position of the parking brake and the service brake when the spring brake chamber (15) is vented and when the service brake chamber (19) is pressurized.

6. Combined service brake and spring brake cylinder according to any one of claims 3 to 5, **characterized in that** the spring brake piston (10), seen radially, extends from the central opening beyond a radially outer circumferential surface of the service brake cylinder (6) to the radially inner circumferential surface of the spring brake cylinder (4).

7. Combined service brake and spring brake cylinder according to one of the preceding claims, **characterized in that** the breathing valve (28) comprises a valve seat (30) and a valve body (32) biased by spring means (31) away from the valve seat (30) into the open position of the breathing valve (28), which valve body (32) is urged against the valve seat (30) by the service brake pressure against the action of the spring means (31) to move the breathing valve (28) from the open position to the closed position.

8. Combined service brake and spring brake cylinder according to one of the preceding claims, **characterized in that** during ventilation of the service brake chamber (19) the volume of the return spring chamber (24) is reduced and thereby a first air flow is generated which passes second flow connection (35) and the third flow connection (36).

9. Combined service brake and spring brake cylinder according to one of the preceding claims, **characterised in that** when the spring brake chamber (15) is pressurized, the volume of the spring chamber (16) is reduced and thereby a second air flow is generated which passes through the third flow connection (36).

10. A pneumatic or electro-pneumatic vehicle brake comprising at least one combined service brake and spring brake cylinder (1) according to any one of the preceding claims.

## Patentansprüche

1. Kombinierter Betriebsbrems- und Federspeicherbremszylinder (1) zur Betätigung einer Betriebsbremse und einer Feststellbremse, umfassend:
a) einen Federspeicherbremszylinder (4), einen Federspeicherkolben (10) und mindestens eine den Federspeicherkolben (10) in einer Feststellbremsbetätigungsrichtung belastende Speicherfeder (3), wobei der Federspeicherkolben (10) auf einer radial inneren Umfangsfläche des Federspeicherbremszylinders (4) verschiebbar geführt ist, und der Federspeicherkolben (10) und der Federspeicherbremszylinder (4) eine Federspeicherkammer (15) begrenzen, die durch einen Feststellbremsdruck belüftet werden kann,
b) einen Betriebsbremszylinder (6) und einen Betriebsbremskolben (18), wobei der Betriebsbremszylinder (6) und der Betriebsbremskolben (18) eine Betriebsbremskammer (19) begrenzen, die mit einem Betriebsbremsdruck beaufschlagt und entlüftet werden kann, wobei
c) der Betriebsbremszylinder (6), radial gesehen, im Inneren des Federspeicherbremszylinders (4) angeordnet ist, und
d) wobei der Betriebsbremskolben (18) direkt auf einer radial inneren Umfangsfläche des Betriebsbremszylinders (6) verschiebbar geführt ist, oder
e) wobei am Betriebsbremszylinder (6) und/oder am Federspeicherbremszylinder (4) eine mit dem Betriebsbremskolben (18) zusammenwirkende Membran befestigt ist, und wobei
f) zwischen einer radial äußeren Umfangsfläche des Betriebsbremszylinders (6) und dem Federspeicherbremszylinder (4) eine Federkammer (16) als Ringkammer ausgebildet ist, in der die mindestens eine Speicherfeder (3) angeordnet ist, **dadurch gekennzeichnet, dass**
g) eine Atmungsvorrichtung bereitgestellt ist, die mindestens umfasst:
g1) ein Atmungsventil (28), das in einer Durchgangsöffnung des Betriebsbremskolbens (18) angeordnet ist und vom Betriebsbremsdruck in der Betriebsbremskammer (19) derart gesteuert wird, dass es bei entlüfteter Betriebsbremskammer (19) eine offene Position einnimmt, in der eine erste Strömungsverbindung (33) zwischen der Betriebsbremskammer (19) und der Rückstellfederkammer (24) offen ist, und bei druckbeaufschlagter Betriebsbremskammer (19) aus der offenen Position in eine geschlossene Position gebracht wird, in der die erste Strömungsverbindung (33) blockiert ist,
g2) eine zweite Strömungsverbindung (35) zwischen der Rückstellfederkammer (24) und der Federkammer (16),
g3) eine dritte Strömungsverbindung (36) zwischen der Federkammer (16) und der Atmosphäre.

2. Kombinierter Betriebsbrems- und Federspeicherbremszylinder nach Anspruch 1, **dadurch gekennzeichnet, dass** der Betriebsbremskolben (18) mit einer Betriebsbremskolbenstange (22) verbunden ist, welche die Betriebsbremse betätigt, wenn die Betriebsbremskammer (19) mit Druck beaufschlagt ist, und welche die Betriebsbremse löst, wenn die Betriebsbremskammer (19) entlüftet ist.

3. Kombinierter Betriebsbrems- und Federspeicherbremszylinder nach Anspruch 2, **dadurch gekennzeichnet, dass** der Federspeicherkolben (10) eine zentrale Öffnung mit einem Lager (26) aufweist, durch welches der Federspeicherkolben (10) auf der Betriebsbremskolbenstange (22) axial geführt wird und/oder durch welches die Betriebsbremskolbenstange (22) und der Federspeicherkolben (10) relativ zueinander axial verschiebbar sind.

4. Kombinierter Betriebsbrems- und Federspeicherbremszylinder nach Anspruch 3, **dadurch gekennzeichnet, dass** die Betriebsbremskolbenstange (22), insbesondere an ihrem radial äußeren Umfang, einen radialen Vorsprung (27) aufweist, der einen axialen Anschlag für den Federspeicherkolben (10) bildet.

5. Kombinierter Betriebsbrems- und Federspeicherbremszylinder nach Anspruch 4, **dadurch gekennzeichnet, dass** der radiale Vorsprung (27) auf der Betriebsbremskolbenstange (22) so angeordnet und ausgebildet ist, dass
a) der Federspeicherkolben (10) die Betriebsbremskolbenstange (22) durch Anlegen an den radialen Vorsprung (27) in die angezogene Position der Feststellbremse bringt, wenn die Federspeicherkammer (15) entlüftet ist, und/oder dass
b) der radiale Vorsprung (27) außer Eingriff mit dem Federspeicherkolben (10) kommt und dadurch die Betriebsbremskolbenstange (22) in die betätigte Position der Betriebsbremse gebracht wird, wenn die Federspeicherkammer (15) und die Betriebsbremskammer (19) mit Druck beaufschlagt werden, und/oder dass
c) der Federspeicherbremskolben (10) durch Anlegen an den radialen Vorsprung (27) und den Betriebsbremskolben (18) die Betriebsbremskolbenstange (22) in die betätigte Position der Feststellbremse und der Betriebsbremse bringen, wenn die Federspeicherkammer (15) entlüftet und die Betriebsbremskammer (19) mit Druck beaufschlagt wird.

6. Kombinierter Betriebsbrems- und Federspeicherbremszylinder nach einem der Ansprüche 3 bis 5, **dadurch gekennzeichnet, dass** sich der Federspeicherkolben (10), radial gesehen, von der zentralen Öffnung über eine radial äußere Umfangsfläche des Betriebsbremszylinders (6) zur radial inneren Umfangsfläche des Federspeicherbremszylinders (4) erstreckt.

7. Kombinierter Betriebsbrems- und Federspeicherbremszylinder nach einem der vorstehenden Ansprüche, **dadurch gekennzeichnet, dass** das Entlüftungsventil (28) einen Ventilsitz (30) und einen durch Federmittel (31) vom Ventilsitz (30) weg in die offene Position des Atmungsventils (28) vorgespannten Ventilkörper (32) umfasst, wobei der Ventilkörper (32) durch den Betriebsbremsdruck entgegen der Wirkung der Federmittel (31) gegen den Ventilsitz (30) gedrückt wird, um das Atmungsventil (28) von der offenen Position zur geschlossenen Position zu bewegen.

8. Kombinierter Betriebsbrems- und Federspeicherbremszylinder nach einem der vorstehenden Ansprüche, **dadurch gekennzeichnet, dass** bei der Entlüftung der Betriebsbremskammer (19) das Volumen der Rückstellfederkammer (24) reduziert und dadurch ein erster Luftstrom erzeugt wird, der die zweite Strömungsverbindung (35) und die dritte Strömungsverbindung (36) passiert.

9. Kombinierter Betriebsbrems- und Federspeicherbremszylinder nach einem der vorstehenden Ansprüche, **dadurch gekennzeichnet, dass** bei Druckbeaufschlagung der Federspeicherkammer (15) das Volumen der Federspeicherkammer (16) reduziert wird und dadurch ein zweiter Luftstrom erzeugt wird, der die dritte Strömungsverbindung (36) passiert.

10. Pneumatische oder elektropneumatische Fahrzeugbremse, umfassend mindestens einen kombinierten Betriebsbrems- und Federspeicherbremszylinder (1) nach einem der vorstehenden Ansprüche.

## Revendications

1. Cylindre combiné de frein de service et de frein à ressort (1) destiné à actionner un frein de service et un frein de stationnement, comprenant :
a) un cylindre de frein à ressort (4), un piston de frein à ressort (10) et au moins un ressort accumulateur (3) chargeant le piston de frein à ressort (10) dans une direction de serrage du frein de stationnement, dans lequel le piston de frein à ressort (10) est guidé de manière mobile sur une surface circonférentielle radialement interne du cylindre de frein à ressort (4), et le piston de frein à ressort (10) et le cylindre de frein à ressort (4) délimitent une chambre de frein à ressort (15) qui peut être ventilée par une pression de frein de stationnement,
b) un cylindre de frein de service (6) et un piston de frein de service (18), le cylindre de frein de service (6) et le piston de frein de service (18) délimitant une chambre de frein de service (19) qui peut être pressurisée avec une pression de frein de service et dépressurisée, dans lequel
c) le cylindre de frein de service (6), vu radialement, est agencé à l'intérieur du cylindre de frein à ressort (4), et
d) dans lequel le piston de frein de service (18) est guidé de manière mobile directement sur une surface circonférentielle radialement interne du cylindre de frein de service (6), ou
e) dans lequel un diaphragme coopérant avec le piston de frein de service (18) est fixé au cylindre de frein de service (6) et/ou au cylindre de frein à ressort (4), et dans lequel
f) entre une surface circonférentielle radialement externe du cylindre de frein de service (6) et le cylindre de frein à ressort (4), une chambre de ressort (16) est constituée sous la forme d'une chambre annulaire dans laquelle le au moins un ressort accumulateur (3) est agencé, **caractérisé en ce que**
g) un dispositif à reniflard est fourni comprenant au moins :
g1) un reniflard (28) qui est agencé dans une ouverture traversante du piston de frein de service (18) et est commandé par la pression de frein de service dans la chambre de frein de service (19) d'une manière telle qu'il adopte une position ouverte lorsque la chambre de frein de service (19) est dépressurisée, dans laquelle un premier raccord d'écoulement (33) entre la chambre de frein de service (19) et une chambre de ressort de rappel (24) est ouvert, et qu'il est amené de la position ouverte à une position fermée, dans laquelle le premier raccord d'écoulement (33) est bloqué lorsque la chambre de frein de service (19) est pressurisée,
g2) un deuxième raccord d'écoulement (35) entre la chambre de ressort de rappel (24) et la chambre de ressort (16),
g3) un troisième raccord d'écoulement (36) entre la chambre de ressort (16) et l'atmosphère.

2. Cylindre combiné de frein de service et de frein à ressort selon la revendication 1, **caractérisé en ce que** le piston de frein de service (18) est raccordé à une tige de piston de frein de service (22) qui actionne le frein de service lorsque la chambre de frein de service (19) est pressurisée et qui libère le frein de service lorsque la chambre de frein de service (19) est dépressurisée.

3. Cylindre combiné de frein de service et de frein à ressort selon la revendication 2, **caractérisé en ce que** le piston de frein à ressort (10) présente une ouverture centrale comportant un roulement (26) à travers lequel le piston de frein à ressort (10) est guidé axialement sur la tige de piston de frein de service (22) et/ou à travers lequel la tige de piston de frein de service (22) et le piston de frein à ressort (10) peuvent se déplacer axialement l'un par rapport à l'autre.

4. Cylindre combiné de frein de service et de frein à ressort selon la revendication 3, **caractérisé en ce que** la tige de piston de frein de service (22) présente, en particulier sur sa circonférence radialement externe, une saillie radiale (27) qui forme une butée axiale pour le piston de frein à ressort (10).

5. Cylindre combiné de frein de service et de frein à ressort selon la revendication 4, **caractérisé en ce que** la saillie radiale (27) est agencée et formée sur la tige de piston de frein de service (22) d'une manière telle que
a) le piston de frein à ressort (10) amène la tige de piston de frein de service (22) dans la position serrée du frein de stationnement par mise en butée contre la saillie radiale (27) lorsque la chambre de frein à ressort (15) est dépressurisée, et/ou **en ce que**
b) la saillie radiale (27) se désengage du piston de frein à ressort (10) et par conséquent la tige de piston de frein de service (22) est amenée dans la position serrée du frein de service lorsque la chambre de frein à ressort (15) et la chambre de frein de service (19) sont pressurisées, et/ou **en ce que**
c) le piston de frein à ressort (10) venant en butée contre la saillie radiale (27) et le piston de frein de service (18) amènent la tige de piston de frein de service (22) dans la position serrée du frein de stationnement et du frein de service lorsque la chambre de frein à ressort (15) est dépressurisée et lorsque la chambre de frein de service (19) est pressurisée.

6. Cylindre combiné de frein de service et de frein à ressort selon l'une quelconque des revendications 3 à 5, **caractérisé en ce que** le piston de frein à ressort (10), vu radialement, s'étend depuis l'ouverture centrale au-delà d'une surface circonférentielle radialement externe du cylindre de frein de service (6) jusqu'à la surface circonférentielle radialement interne du cylindre de frein à ressort (4).

7. Cylindre combiné de frein de service et de frein à ressort selon l'une des revendications précédentes, **caractérisé en ce que** le reniflard (28) comprend un siège de soupape (30) et un corps de soupape (32) sollicité par un moyen formant ressort (31) pour s'écarter du siège de soupape (30) dans la position ouverte du reniflard (28), lequel corps de soupape (32) est poussé contre le siège de soupape (30) par la pression du frein de service contre l'action du moyen formant ressort (31) de façon à déplacer le reniflard (28) de la position ouverte à la position fermée.

8. Cylindre combiné de frein de service et de frein à ressort selon l'une des revendications précédentes, **caractérisé en ce que**, lors d'une ventilation de la chambre de frein de service (19), le volume de la chambre de ressort de rappel (24) est réduit, ce qui génère un premier écoulement d'air qui passe par le deuxième raccord d'écoulement (35) et le troisième raccord d'écoulement (36).

9. Cylindre combiné de frein de service et de frein à ressort selon l'une des revendications précédentes, **caractérisé en ce que**, lorsque la chambre de frein à ressort (15) est pressurisée, le volume de la chambre de ressort (16) est réduit, ce qui génère un second écoulement d'air qui passe par le troisième raccord d'écoulement (36).

10. Frein de véhicule pneumatique ou électropneumatique comprenant au moins un cylindre combiné de frein de service et de frein à ressort (1) selon l'une quelconque des revendications précédentes.
